# EUROPÄISCHE PATENTANMELDUNG

(11) **EP 0 965 683 A2**
(43) Veröffentlichungstag der Anmeldung: **22.12.1999**
(21) Anmeldenummer: 99890041.9
(22) Anmeldetag: 04.02.1999
(51) Int. Cl.: D21F 1/36

(54) **Vorrichtung zur Verstellung eines der Lagerböcke einer Walze in einer Walzengruppe**

(30) Priorität: 16.06.1998 AT 103098
(71) Anmelder: Bartelmuss, Klaus, 8833 Teufenbach (AT); Bartelmuss, Heinz, 8833 Teufenbach (AT)
(72) Erfinder: Bartelmuss, Klaus, 8833 Teufenbach (AT); Bartelmuss, Heinz, 8833 Teufenbach (AT)
(74) Vertreter: Atzwanger, Richard, Dipl.-Ing. Patentanwalt

(57) **Zusammenfassung**

Vorrichtung zur Verstellung eines der Lagerböcke einer Walze in einer Walzengruppe zur Unterstützung und zur Bewegung eines endlosen bewegten Bandes, wie des Siebbandes, des Förderbandes od. dgl. in einer Anlage zur Papiererzeugung, wobei der Lagerbock (4) an einem längs mindestens einer Führungsschiene (23) verstellbaren Schlitten (3) angeordnet ist, welcher mittels einer Stelleinrichtung (5) gegenüber einem Traggestell (1) in Förderrichtung des Walzenfeldes verschiebbar ist, wodurch die Winkellage der im Lagerbock (4) gelagerten Walze gegenüber der Förderrichtung des Walzenfeldes veränderbar ist. Dabei ist zwischen dem Schlitten (3) und der mindestens einen Führungsschiene (23) ein am Schlitten (3) lösbar befestigtes, aus einem hoch gleitfähigem Material hergestelltes Gleitelement (6) angeordnet (Fig. 3).

## Beschreibung

Die gegenständliche Erfindung betrifft eine Vorrichtung zur Verstellung eines der Lagerböcke einer Walze in einer Walzengruppe zur Unterstützung und zur Bewegung eines endlosen bewegten Bandes, wie des Siebbandes oder des Förderbandes in einer Anlage zur Papiererzeugung, wobei der Lagerbock an einem längs mindestens einer Führungsschiene verstellbaren Schlitten angeordnet ist, welcher mittels einer Stelleinrichtung gegenüber einem Traggestell in Förderrichtung des Walzenfeldes verstellbar ist, wodurch die Winkellage der im Lagerbock gelagerten Walze gegenüber der Förderrichtung des Walzenfeldes veränderbar ist.

Bei Anlagen, welche mit einem endlosen, bewegten Band, welches über eine Vielzahl von nebeneinander angeordneten Walzen geführt ist, ausgebildet sind, wie z.B. bei einer Anlage zur Papiererzeugung, welche ein Siebband aufweist, das über eine Vielzahl von aufeinanderfolgenden Walzen geführt ist, besteht das Erfordernis, daß die Bewegungsrichtung des Bandes mit der Förderrichtung des Walzenfeldes exakt übereinstimmt. Soferne demgegenüber durch Unregelmäßigkeiten des Bandes oder der Walzen oder aus anderen Gründen die Bewegungsrichtung des Bandes von der Förderrichtung des Walzenfeldes abweicht, wodurch die Bewegungsrichtung des Bandes mit der Förderrichtung des Walzenfeldes einen spitzen Winkel einschließt, führt dies nicht nur zu unzulässigen Belastungen des Bandes, sondern kann zudem das Band aus dem Walzenfeld seitlich hinauswandern, wodurch Funktionsstörungen bedingt werden.

Es ist bekannt, zur Überwachung der Bewegungsrichtung des Bandes, welches über ein Walzenfeld geführt ist, eine Meßeinrichtung vorzusehen, durch welche unzulässige Abweichungen der Bewegungsrichtung des Bandes von der Förderrichtung des Walzenfeldes erfaßt werden, wodurch in der Folge Maßnahmen getroffen werden können, um die Bewegungsrichtung des Bandes zu korrigieren. Eine Korrektur ist dabei dadurch möglich, daß die Winkellage eines oder einer Mehrzahl der Walzen des Walzenfeldes geringfügig verändert wird.

Um die Ausrichtung einer Walze des Walzenfeldes verändern zu können, ist es bekannt, einen der beiden Lagerböcke in der Förderrichtung des Walzenfeldes dadurch verstellbar auszubilden, daß unterhalb des Lagerbockes eine Kolben-Zylindereinrichtung angeordnet ist. Dabei ist der Zylinder unterhalb des Lagerbockes im Gestell der Anlage starr befestigt und ist weiters der Lagerbock vom Kolben getragen, welcher innerhalb des Zylinders in Förderrichtung des Walzenfeldes verstellbar ist. Mittels einer Verschiebung des Kolbens kann die Winkellage der von diesem Lagerbock getragenen Walze gegenüber der Förderrichtung des Walzenfeldes verstellt werden, wodurch die Bewegungsrichtung des Bandes beeinflußbar ist.

Diese bekannte Vorrichtung ist jedoch deshalb nachteilig, da die vom Lagerbock aufgenommenen Kräfte über den Kolben auf den Zylinder übertragen werden, wodurch eine hohe Belastung der zwischen dem Kolben und dem Zylinder angeordneten Dichtungen bedingt wird. Zudem ist diese bekannte Einrichtung deshalb nachteilig, da sich die Kolben-Zylindereinrichtung unterhalb des zugeordneten Lagerbockes befindet, wodurch sie für eine Wartung bzw. für eine Reparatur nur schwer zugänglich ist.

Aus der EP 733 736 A2 ist weiters eine Vorrichtung bekannt, durch welche dieser Nachteil dadurch vermieden wird, daß am Schlitten ein mit Laufrollen versehenen Wagen vorgesehen ist, welcher mittels einer weiteren Stelleinrichtung gegenüber dem Traggestell verfahrbar ist. Wenngleich diese bekannte Vorrichtung gegenüber dem früher bekannten Stand der Technik vorteilhaft ist, weist sie jedoch den Nachteil auf, daß sie bei einer Beschädigung oder bei einem Bruch der Laufrollen oder anderer Bestandteile vollständig zerlegt werden muß, um die beschädigten oder nicht funktionsfähigen Bestandteile entfernen und durch neue Bestandteile ersetzen zu können.

Der gegenständlichen Erfindung liegt demnach die Aufgabe zugrunde, eine derartige Vorrichtung zu schaffen, bei welcher bruchgefährdete bzw. störungsanfällige Bestandteile, wie Laufrollen, vermieden sind und bei welcher die aufgrund der Stellbewegungen einem Verschleiß ausgesetzten Bestandteile austauschbar sind, ohne daß hierdurch die gesamte Vorrichtung zerlegt werden muß. Diese Aufgaben werden erfindungsgemäß dadurch gelöst, daß zwischen dem Schlitten und der mindestens einen Führungsschiene ein am Schlitten lösbar befestigtes, aus einem hoch gleitfähigem Material hergestelltes Gleitelement vorgesehen ist.

Vorzugsweise ist dem Schlitten mindestens ein Befestigungselement zugeordnet, welches am Schlitten lösbar befestigt ist und welches zur Lagefixierung des jeweiligen Gleitelementes dient. Soferne die mindestens eine Führungsschiene durch eine zylindrische Stange gebildet ist, ist das Gleitelement hülsenförmig ausgebildet. Dabei ist das Gleitelement insbesondere als geschlitzte Hülse ausgebildet. Alternativ dazu kann das Gleitelement mehrteilig, insbes. zweiteilig, ausgebildet sein.

Nach weiteren bevorzugten Merkmalen ist das Gleitelement an seinen beiden Oberflächen mit einer Profilierung ausgebildet, wobei es insbesondere mit in Stellrichtung verlaufenden Rippen ausgebildet ist. Zudem kann das Gleitelement an seinem Umfang mit einer ringartigen Rippe ausgebildet sein, welcher im Schlitten eine gegengleiche, ringförmige Nut zugeordnet ist.

Der Gegenstand der Erfindung ist nachstehend anhand eines in der Zeichnung dargestellten Ausführungsbeispiels näher erläutert. Es zeigen:
- Fig. 1a und 1b: eine erfindungsgemäße Vorrichtung, im Schnitt gemäß den Linien A-A bzw. B-B der Fig. 2,
- Fig. 2: diese Vorrichtung, im Schnitt nach der Linie C-C der Fig. 1a,
- Fig. 3: ein Detail der Fig. 1a, in gegenüber der Fig. 1a vergrößertem Maßstab,
- die Fig. 4a und 4b: eine erste Ausführungsform einer Gleithülse, in Seitenansicht und in Stirnansicht,
- die Fig. 4c und 4d: eine zweite Ausführungsform einer Gleithülse, in Seitenansicht und in Stirnansicht, und
- Fig. 5: die erste Gleithülse im Stadium von deren Aufbringung auf eine Führungsstange, in Seitenansicht.

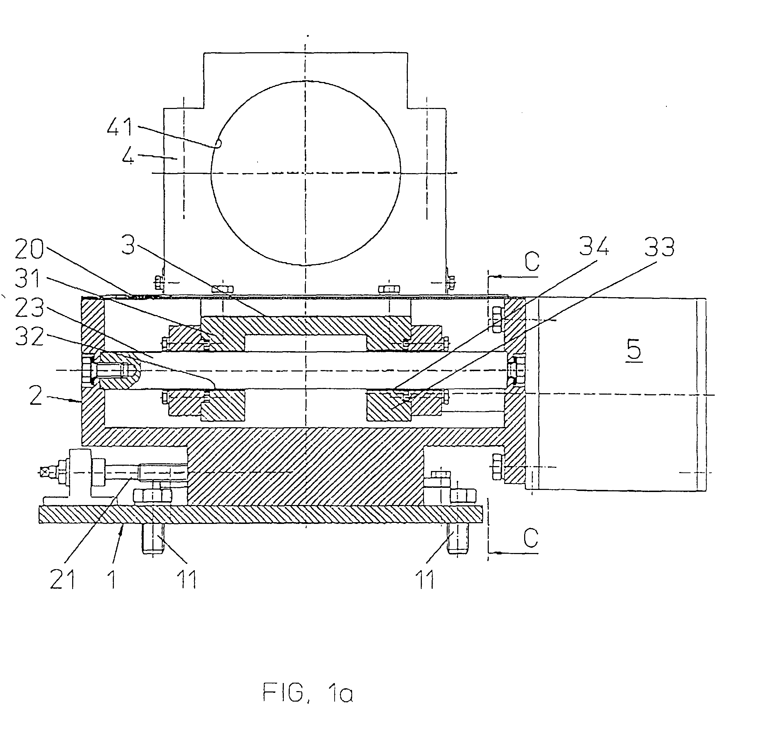

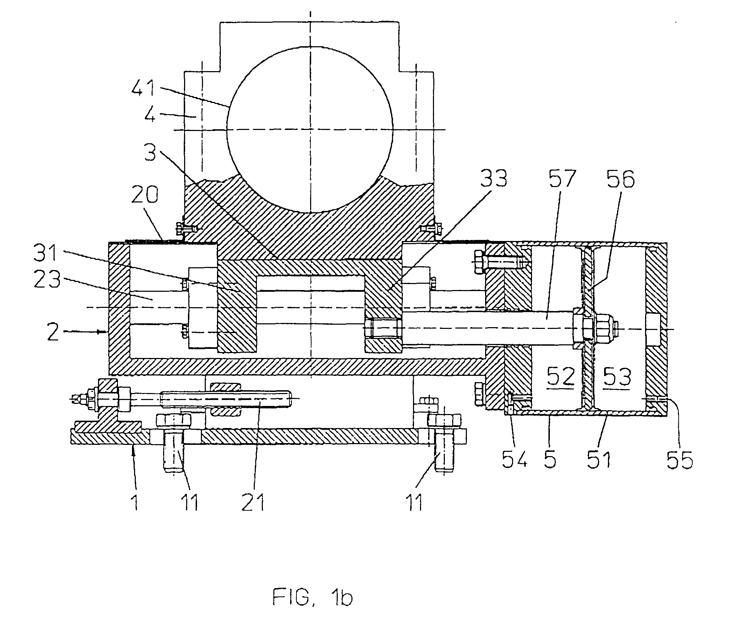

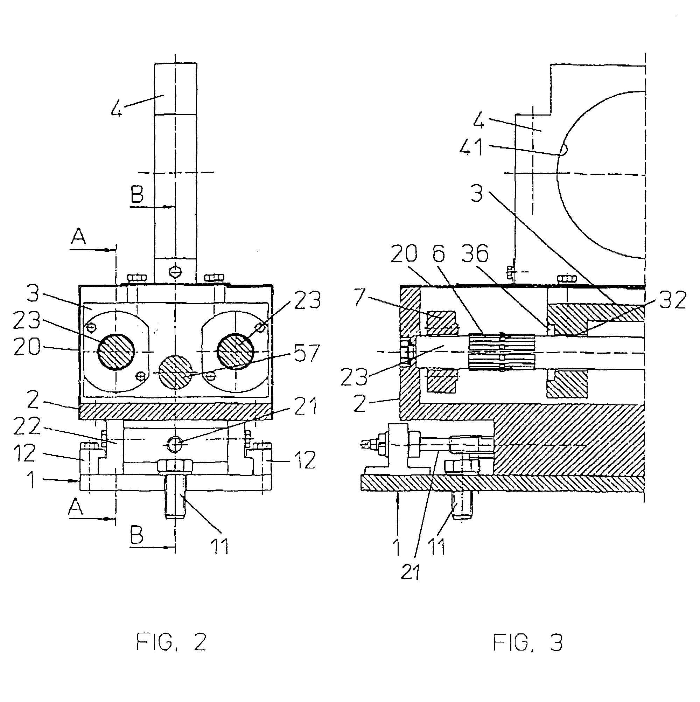

Wie dies aus den Fig. 1a und 1b sowie Fig. 2 ersichtlich ist, weist eine erfindungsgemäße Vorrichtung eine Tragplatte 1 auf, welche mittels Schraubbolzen 11 an einem Gestell einer Anlage, welche eine Vielzahl von Walzen zur Unterstützung und Bewegung eines endlosen Bandes aufweist, befestigt ist. Da die Tragplatte 1 mit Schlitzen versehen ist, welche von den Schraubbolzen 11 durchragt sind, kann sie in der Förderrichtung des Walzenfeldes verstellt werden. Weiters ist die Tragplatte 1 mit seitlich hochragenden Flanschen 12 ausgebildet, in welchen ein Schlitten 2 geführt ist, welcher mittels einer Spindel 21 gleichfalls in Förderrichtung des Walzenfeldes verstellbar ist.

Der Schlitten 2 ist in seinem unteren Bereich mit einem kastenförmigen Profil 22 ausgebildet, welches zwischen den Flanschen 12 der Tragplatte 1 geführt ist. In seinem oberen Bereich ist der Schlitten 2 mit zwei Führungsstangen 23 ausgebildet, welche zur Führung eines zweiten Schlittens 3 dienen. Am Schlitten 3 ist ein Lagerbock 4 starr befestigt. Der Lagerbock 4 ist mit einem Lager 41 für eine der Walzen des Walzenfeldes ausgebildet. Der zweite Schlitten 3, welcher im Längsschnitt U-förmig ausgebildet ist, ist mit jeweils zwei in den beiden Schenkeln 31 und 33 angeordneten Bohrungen 32 und 34 versehen, welche von den Führungsstangen 23 durchsetzt sind.

Zur Verschiebung des zweiten Schlittens 3 dient eine Kolben-Zylindereinrichtung 5, welche seitlich außerhalb des Lagerbockes 4 angeordnet ist. Die Kolben-Zylindereinrichtung 5 besteht aus einem Zylinder 51, dessen Innenräume 52 und 53 über Öffnungen 54 und 55 mit einem Druckmittel beaufschlagbar sind. Innerhalb der Zylinderräume 52 und 53 ist ein Kolben 56 angeordnet, welcher durch Speisung eines der Zylinderräume 52 bzw. 53 mittels des Druckmittels verstellbar ist. Der Kolben 56 ist mittels einer Kolbenstange 57 mit dem Schenkel 33 des zweiten Schlittens 3 lösbar verbunden. Die gesamte Vorrichtung ist von einem Gehäuse 20 umschlossen, welches lösbar angeordnet ist, wodurch es vom ersten Schlitten 2 abgenommen werden kann. Hierdurch sind die Führungsstangen 23 und der längs dieser verschiebbare zweite Schlitten 3 zugänglich.

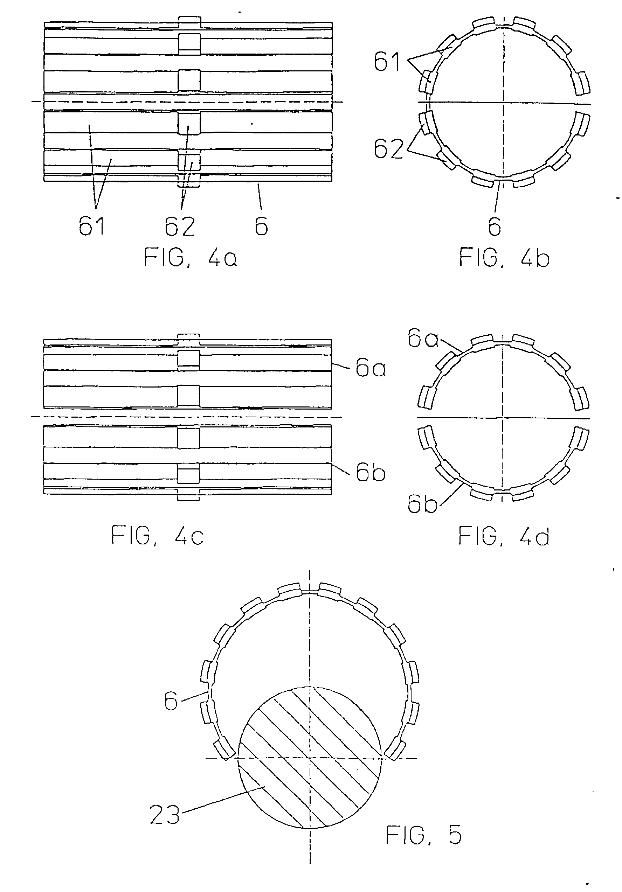

Wie dies inbes. aus Fig. 3 ersichtlich ist, sind zur Lagerung des zweiten Schlittens 3 auf den Führungsstangen 23 Gleithülsen 6 vorgesehen, welche in die Bohrungen 32 bzw. 34 des zweiten Schlittens 3 eingesetzt sind. Die Gleithülsen 6 sind, wie dies insbes. aus den Fig. 4a und Fig. 4b ersichtlich ist, an ihrer Mantelfläche und an ihrer Innenfläche mit Rippen 61 ausgebildet. Zudem sind die Gleithülsen 6 mit längs eines Ringes verlaufenden Vorsprüngen 62 ausgebildet, welchen in den Schenkeln 31 bzw. 33 jeweils eine ringförmige Nut 36 zugeordnet ist.

Schließlich ist eine Befestigungshülse 7 vorgesehen, welche die jeweils zugeordneten Führungsstangen 23 umgibt. Die Befestigungshülsen 7 sind mit den zugeordneten Schenkeln 31 und 33 des zweiten Schlittens 3 verschraubbar, wodurch die in die Bohrungen 32 und 34 eingesetzten Gleithülsen 6 lagefixiert sind. Die Gleithülsen 6 sind aus einem Polymer, welches Fasern und Festschmierstoffe enthält, hergestellt.
Wie dies in Fig. 4c und 4d dargestellt ist, können die Gleithülsen auch aus zwei halbzylindrischen Teilen 6a und 6b bestehen.

Nachstehend ist die Wirkungsweise dieser Vorrichtung beschrieben: Der erste Schlitten 2 ist mittels der Spindel 21 in eine solche Lage verstellbar, in welcher der Lagerbock 4 eine mittlere Lage einnimmt, wobei die in diesem gelagerte Walze gegenüber der Förderrichtung des Walzenfeldes einen rechten Winkel einschließt. Soferne zur Korrektur der Bewegung des Bandes, welches auf den Walzen aufliegt, die Winkellage einer Walze oder mehrerer Walzen gegenüber der Förderrichtung des Walzenfeldes verstellt werden muß, wird einer der Innenräume 52 und 53 des Zylinders 5 über eine der Öffnungen 54 bzw. 55 mit dem Druckmittel beaufschlagt, wodurch der Kolben 56 verstellt wird. Hierdurch wird mittels der Kolbenstange 57 der zweite Schlitten 3 verschoben, wodurch der Lagerbock 4 in der Förderrichtung des Walzenfeldes verstellt wird. Hierdurch wird die Winkellage der im Lagerbock 4 gelagerten Walze gegenüber der Förderrichtung des Walzenfeldes verstellt, wodurch eine Korrektur der Bewegungsrichtung des Bandes bewirkt wird.

Da die vom Lagerbock 4 aufgenommenen Belastungen über die Gleithülsen 6 des zweiten Schlittens 3 auf den ersten Schlitten 2 übertragen werden, braucht für die Verschiebung des zweiten Schlittens 3 nur die hierdurch bedingte Gleitreibung überwunden zu werden. Da der Antriebszylinder 5 seitlich außerhalb der vom Lagerbock 4 getragenen Walze angeordnet ist, ist er für die Wartungszwecke leicht zugänglich.

Soferne das Erfordernis besteht, eine der Gleithülsen 6 durch eine neue zu ersetzen, wird die Abdeckung 20 entfernt und werden die Befestigungshülsen 7 von den Schenkeln 31 und 33 des zweiten Schlittens 3 gelöst und längs der Führungsstangen 23 verschoben. Hierdurch können auch die Gleithülsen 6 so weit verschoben werden, daß sie sich vollständig außerhalb der Bohrungen 32 und 34 befinden. Da die Gleithülsen 6 geschlitzt und elastisch verformbar sind, können sie - wie dies in Fig. 5 dargestellt ist, von den Führungsstangen 23 entfernt und durch neue Gleithülsen 7 ersetzt werden. Soferne die Gleithülsen 6 zweiteilig sind, können sie ebenso leicht entfernt und durch neue ersetzt werden.

Da der zweite Schlitten 3 längs Gleitführungen verstellbar ist, können von diesem wesentlich höhere Lasten aufgenommen werden, als dies für bei einem Wagen vorgesehenen Roll-Lagerungen der Fall ist. Aufgrund moderner Werkstoffe, welche einen sehr geringen Widerstand gegenüber einer Gleitreibung aufweisen, aus welchen die Gleithülsen 6 hergestellt sind, bedarf es dessen ungeachtet dabei keiner durch die Stellzylinder aufgebrachten erhöhten Stellkräfte.

## Patentansprüche

1. Vorrichtung zur Verstellung eines der Lagerböcke einer Walze in einer Walzengruppe zur Unterstützung und zur Bewegung eines endlosen bewegten Bandes, wie des Siebbandes, des Förderbandes od. dgl. in einer Anlage zur Papiererzeugung, wobei der Lagerbock [4] an einem längs mindestens einer Führungsschiene [23] verstellbaren Schlitten [3] angeordnet ist, welcher mittels einer Stelleinrichtung [5] gegenüber einem Traggestell [1] in Förderrichtung des Walzenfeldes verschiebbar ist, wodurch die Winkellage der im Lagerbock [4] gelagerten Walze gegenüber der Förderrichtung des Walzenfeldes veränderbar ist, dadurch gekennzeichnet, daß zwischen dem Schlitten [3] und der mindestens einen Führungsschiene [23] ein am Schlitten [3] lösbar befestigtes, aus einem hoch gleitfähigem Material hergestelltes Gleitelement [6] angeordnet ist [Fig. 3].

2. Vorrichtung nach Patentanspruch 1, dadurch gekennzeichnet, daß dem Schlitten [3] mindestens ein Befestigungselement [7] zugeordnet ist, welches am Schlitten [3] lösbar befestigt ist und welches zur Lagefixierung des Gleitelementes [6] dient [Fig. 3].

3. Vorrichtung nach einem der Patentansprüche 1 und 2, dadurch gekennzeichnet, daß die mindestens eine Führungsschiene durch eine zylindrische Stange [23] gebildet ist und daß das Gleitelement [6] hülsenförmig ausgebildet ist [Fig. 3].

4. Vorrichtung nach Patentanspruch 3, dadurch gekennzeichnet, daß das Gleitelement [6] als geschlitzte Hülse ausgebildet ist [Fig. 4, Fig. 4b].

5. Vorrichtung nach einem der Patentansprüche 2 bis 4, dadurch gekennzeichnet, daß das Gleitelement [6] mehrteilig, insbes. zweiteilig, ausgebildet ist [Fig. 4c, Fig. 4d].

6. Vorrichtung nach einem der Patentansprüche 1 bis 5, dadurch gekennzeichnet, daß das Gleitelement [6] an seiner Außenseite und an seiner Innenseite mit einer Profilierung [61] ausgebildet ist [Fig. 4a, 4b].

7. Vorrichtung nach Patentanspruch 6, dadurch gekennzeichnet, daß das Gleitelement [6] an seiner Außenseite und an seiner Innenseite mit in Stellrichtung verlaufenden Rippen [61] ausgebildet ist [Fig. 4a, Fig. 4b].

8. Vorrichtung nach einem der Patentansprüche 2 bis 7, dadurch gekennzeichnet, daß das Gleitelement [6] an seiner Außenseite mit einer ringförmigen Rippe [62] ausgebildet ist, welcher am Schlitten [3] eine ringförmige Nut [36] zugeordnet ist [Fig. 3].
